# EUROPÄISCHE PATENTSCHRIFT

(11) **EP 3 245 713 B1**
(45) Veröffentlichungstag und Bekanntmachung des Hinweises auf die Patenterteilung: **16.10.2019**
(21) Anmeldenummer: 16701404.2
(22) Anmeldetag: 13.01.2016
(51) Int. Cl.: H02K 7/18, H02K 16/00

(54) **VORRICHTUNG ZUR ERZEUGUNG ELEKTRISCHER ENERGIE AUS EINER ROTATIONSBEWEGUNG**
DEVICE FOR GENERATING ELECTRICAL ENERGY FROM A ROTATIONAL MOVEMENT
DISPOSITIF DE GÉNÉRATION D'ÉNERGIE ÉLECTRIQUE À PARTIR D'UN MOUVEMENT DE ROTATION

(30) Priorität: 13.01.2015 AT 500202015
(43) Veröffentlichungstag der Anmeldung: 22.11.2017
(73) Patentinhaber: ALKAPAT GmbH, 8074 Raaba-Grambach (AT)
(72) Erfinder: DIENGSLEDER, Carmen Viola, 8430 Tillmitsch (AT)
(74) Vertreter: Wirnsberger & Lerchbaum Patentanwälte OG
(86) Internationale Anmeldenummer: PCT/AT2016/050004
(87) Internationale Veröffentlichungsnummer: WO 2016/112420

(56) Entgegenhaltungen:
- WO-A1-2010/129886
- DE-A1- 2 721 415
- US-A- 4 300 120
- US-A1- 2012 049 524
- US-A1- 2013 221 680
- "ACTIVE THREE PHASE RECTIFIER FEATURES 0.1V DROP", ELECTRONICS WORLD, NEXUS MEDIA COMMUNICATIONS, SWANLEY, KENT, GB, Bd. 103, Nr. 1732, 1. April 1997 (1997-04-01), Seite 323, XP000721941, ISSN: 0959-8332

## Beschreibung

Die Erfindung betrifft eine Vorrichtung zur Erzeugung elektrischer Energie aus einer Rotationsbewegung, aufweisend einen um eine Rotationsachse drehbaren Stator und einen um die Rotationsachse drehbar mit dem Stator verbundenen Rotor, welcher einen außerhalb der Rotationsachse liegenden Schwerpunkt aufweist, wobei im Stator eine Spule zur Induktion einer elektrischen Spannung bei einer Rotation des Stators relativ zum Rotor angeordnet ist, wobei mit der Spule eine elektrische Schaltung mit einem Energiespeicher zur Gleichrichtung der in der Spule induzierten Spannung verbunden ist.

Darüber hinaus betrifft die Erfindung eine Verwendung einer derartigen Vorrichtung. Aus dem Stand der Technik sind verschiedene Vorrichtungen zur Erzeugung elektrischer Energie aus einer Rotationsbewegung bekannt geworden, um beispielsweise Energie für einen Drucksensor in einem Rad eines Kraftfahrzeuges zur Reifendrucküberwachung bereitzustellen. So sind piezoelektrische Vorrichtungen zum Einsatz im Reifen eines Rades eines Kraftfahrzeuges bekannt geworden, wobei eine zyklische Verformung des Reifens zu einer Energieerzeugung genutzt wird.

Des Weiteren sind Vorrichtungen der eingangs genannten Art - beispielsweise aus der deutschen Offenlegungsschrift DE 27 21 415 - bekannt geworden, welche eine rotierende elektrische Maschine aufweisen. Im Unterschied zu stationären rotierenden Maschinen, bei welchen der Stator starr mit einem Fundament oder dergleichen verbunden ist, wird ein Stator bei einer Vorrichtung der eingangs genannten Art drehbar angeordnet und zur Energieerzeugung in eine Rotationsbewegung versetzt. Der frei drehbar mit dem Stator verbundene Rotor weist aufgrund eines exzentrischen Schwerpunktes in zumindest einer Position der Rotationsachse, beispielsweise wenn die Rotationsachse waagrecht ausgerichtet ist, eine definierte Ruhelage auf, in welcher der Schwerpunkt des Rotors senkrecht unter der Rotationsachse liegt. Somit wird der Rotor bei einer Rotation des Stators durch den exzentrischen Schwerpunkt in Verbindung mit der auf den Rotor wirkenden Schwerkraft in der Ruheposition stabilisiert. Dadurch verbleibt der Rotor auch bei einer Rotation des Stators um die Rotationsachse aufgrund der Schwerkraft in der Ruhelage, wenn zwischen Rotor und Stator kein Moment übertragen wird. Dies führt zu einer Relativbewegung zwischen Rotor und Stator um die Rotationsachse. Um bei einer Rotation des Stators relativ zum Rotor eine Induktion einer elektrischen Spannung in der Spule zu erreichen, ist im Rotor einer rotierenden elektrischen Maschine eine Einrichtung zur Erzeugung eines Magnetfeldes vorgesehen, üblicherweise ein oder mehrere Permanentmagnete oder eine Erregerwicklung. Dadurch wird bei Rotation des Stators relativ zum Rotor in der Spule des Stators eine Spannung induziert. Wird an die Spule eine Last angelegt, ruft ein in der Spule fließender Strom ein zwischen Rotor und Stator wirkendes Moment bzw. ein Drehmoment hervor. Dieses Moment und somit die mit der Vorrichtung maximal erreichbare elektrische Leistung ist definiert durch eine auf die Vorrichtung wirkende Schwerkraft sowie einer Masse und einer Exzentrizität des Rotors bzw. einen Abstand des Schwerpunktes des Rotors von der Rotationsachse.

Wird die Vorrichtung in einem Arbeitspunkt betrieben, in welchem eine von der Vorrichtung abgegebene Leistung maximal ist, ist der Rotor um 90° aus der Ruhelage ausgelenkt, sodass eine gedachte Ebene, welche durch die Rotationsachse und den Schwerpunkt des Rotors definiert ist, bei einer horizontalen Rotationsachse waagrecht ist. In diesem Arbeitspunkt würde eine weitere Vergrößerung des zwischen Rotor und Stator wirkenden Momentes zu einem Mitrotieren des Rotors und somit einem Absinken der erzielbaren elektrischen Leistung führen. Des Weiteren würde ein Mitrotieren des Rotors zu einer Beschädigung des Rotors führen, welcher im Unterschied zum Stator nicht für entsprechend große Fliehkräfte ausgebildet ist. Eine maximale Leistung ist daher bei derartigen Vorrichtungen durch eine Exzentrizität des Rotors begrenzt. Für eine Energieversorgung eines Reifendrucksensors sind solche Vorrichtungen des Standes der Technik nicht geeignet, da einerseits aufgrund unterschiedlichster Fahrzustände ein Rotieren des Rotors nicht zuverlässig verhindert werden kann. Andererseits weisen entsprechende Vorrichtungen zur Erzeugung ausreichend großer Spannungen einen ungünstig großen Bauraum auf, welcher für einen Einsatz in einer Felge eines Rades ungeeignet ist.

Hier setzt die Erfindung an. Aufgabe der Erfindung ist es, eine Vorrichtung der eingangs genannten Art anzugeben, welche zur Energieversorgung elektrischer Einrichtungen in einem Rad eines Kraftfahrzeuges geeignet ist. Hierzu soll die Vorrichtung einen kleinen Bauraum aufweisen. Des Weiteren soll gewährleistet sein, dass auch bei unterschiedlichen Betriebszuständen Beschädigungen des Rotors verhindert werden.

Darüber hinaus soll eine Verwendung einer derartigen Vorrichtung angegeben werden.

Die erste Aufgabe wird erfindungsgemäß durch eine Vorrichtung der eingangs genannten Art gelöst, welche zur Erfassung einer Lage einer durch die Rotationsachse und den Schwerpunkt des Rotors definierten Ebene und zur Beeinflussung der Lage der Ebene mittels eines Stromflusses durch die Spule eingerichtet ist, sodass durch den Stromfluss eine Auslenkung der Ebene aus einer Vertikalen bei einer Rotation des Stators begrenzbar ist.

Durch eine entsprechende Ausbildung kann die Vorrichtung auch zur Erzeugung elektrischer Energie in einem Reifen eines Kraftfahrzeuges, beispielsweise eines Personenkraftwagens oder eines Motorrades, eingesetzt werden, wobei eine den Rotor stabilisierende Kraft, welche ein maximales Moment und somit eine maximale Leistung definiert, insbesondere aufgrund einer wechselnden Neigung des Reifens oder wechselnden Beschleunigungen bei einer Bergauf- bzw. Bergabfahrt Schwankungen unterworfen ist. Aufgrund der Ausbildung der Vorrichtung zur Erfassung einer Auslenkung einer Ebene, welche durch den Schwerpunkt des Rotors und eine Rotationsachse definiert ist, bzw. einer Position des Schwerpunktes des Rotors relativ zur Rotationsachse kann die Vorrichtung auch bei wechselnder Auslenkung der Rotationsachse aus einer Horizontalen bzw. einer Beschleunigung in vertikaler Richtung jeweils so betrieben werden, dass ein Maximum an elektrischer Energie erzeugt wird. Gleichzeitig kann ein Mitrotieren des Rotors verhindert werden, welches den Rotor aufgrund auftretender Fliehkräfte zerstören würde. Somit ist es für eine mechanische Stabilität der Vorrichtung ausreichend, dass der Stator für bei einer Rotation um die Rotationsachse auftretende Fliehkräfte ausreichend stabil ausgelegt ist, wodurch die Vorrichtung auf kleinem Bauraum umgesetzt werden kann. Es versteht sich, dass es sich bei der Ebene um eine gedachte Ebene handelt, welche durch die Rotationsachse und den Schwerpunkt des Rotors definiert ist bzw. in welcher die Rotationsachse und der Schwerpunkt des Rotors liegen.

Eine Erfassung der Lage der gedachten Ebene kann auf verschiedenste Weise erfolgen. Beispielsweise kann die Position des Rotors, und somit die Lage der Ebene, auf einfache Weise anhand der im drehenden Stator induzierten Spannungen ermittelt werden, da sich die induzierten Spannungen unmittelbar aus dem bekannten Magnetfeld des Rotors und einer Position des Rotors ergeben. Weitere Möglichkeiten zur Erfassung der Lage der Ebene bestehen in einer optischen oder mechanischen Erfassung einer Position des Rotors. Schließlich kann auch am Rotor ein Sensor wie ein Beschleunigungssensor zur Erfassung einer Ausrichtung des Rotors vorgesehen sein, welcher beispielsweise drahtlos mit Energie versorgt wird und Lagedaten drahtlos übermittelt.

Zur Beeinflussung der Lage der Ebene mittels eines Stromflusses ist die Schaltung üblicherweise derart ausgebildet, dass eine von der Vorrichtung abgegebene Leistung nicht weiter erhöht wird, wenn die Ebene eine definierte Auslenkung aus einer Vertikalen erreicht, welche einer Ruhelage des Rotors entspricht. So liegt der Schwerpunkt des Rotors in der Ruhelage vertikal unter der Rotationsachse. Um auch bei einer starken Neigung der Rotationsachse oder einer senkrecht ausgerichteten Rotationsachse ein Mitrotieren des Rotors zu verhindern, kann die Schaltung auch zur Beaufschlagung der Spule mit einem Strom aus dem Energiespeicher ausgebildet sein. Dadurch kann der Rotor über ein Magnetfeld des Stators in einer definierten Ausrichtung gehalten bzw. ein Mitrotieren verhindert werden.

Um eine Beschädigung des Rotors durch eine bei einer Rotation auftretende Fliehkraft zu verhindern, hat es sich bewährt, dass eine Auslenkung der Ebene auf einen Auslenkungswinkel von maximal 180°, insbesondere maximal 90°, aus einer Ruhelage begrenzt ist.

Wenn die Ebene um 90° aus der Ruhelage ausgelenkt ist, ist ein Moment zur Aufrechterhaltung der Auslenkung bzw. eine durch die Vorrichtung erreichbare Leistung maximal, da dann ein Abstand zwischen Rotationsachse und Schwerpunkt des Rotors in einer Richtung senkrecht zu einem Schwerkraftvektor maximal ist. Es hat sich daher bewährt, die Auslenkung auf maximal 90° zu begrenzen. Um eine Vorrichtung mit kleiner Baugröße und gleichzeitig hoher erzielbarer elektrischer Leistung zu erreichen, ist es günstig, wenn ein Abstand des Schwerpunktes des Rotors von der Rotationsachse mehr als 10 %, vorzugsweise mehr als 20 %, insbesondere mehr als 40 %, eines maximalen Abstandes des Rotors von der Rotationsachse entspricht. Beispielsweise kann der Rotor in einem Schnitt senkrecht zur Rotationsachse einen halbkreisförmigen Querschnitt oder dergleichen aufweisen. Alternativ kann der Rotor auch als Zylinder mit inhomogener Massenverteilung ausgebildet sein, sodass der Schwerpunkt von einer Rotationsachse des Zylinders beabstandet ist. Ist der Rotor beispielsweise durch einen Halbzylinder gebildet, beträgt ein Abstand des Schwerpunktes von der Rotationsachse etwa 42 % eines maximalen Abstandes des Rotors von der Rotationsachse. Ein maximaler Abstand des Rotors von der Rotationsachse entspricht dabei einem Radius des Halbzylinders.

Zur Erzeugung elektrischer Energie aus einer Rotationsbewegung ist der Stator drehbar ausgebildet. Das heißt, dass der Stator für bei einer Drehung um die Rotationsachse auftretende Fliehkräfte mit ausreichender mechanischer Festigkeit ausgebildet ist. Für einen Einsatz der Vorrichtung in einem Reifen bzw. einer Felge eines Kraftfahrzeuges ist es günstig, wenn der Stator für eine Rotation um die Rotationsachse mit einer Drehzahl von mehr als 100 1/min, vorzugweise mehr 500 1/min, insbesondere mehr als 1500 1/min, ausgebildet ist. Es versteht sich, dass mit Vorteil auch weitere Bestandteile der Vorrichtung, welche mit dem Stator bei einem Betrieb rotieren wie die Schaltung, für eine dauerhafte Belastung mit entsprechenden Fliehkräften ausgebildet sind.

Bevorzugt ist ein Neigungssensor zur Erfassung einer Neigung der Rotationsachse vorgesehen. Dadurch kann auf einfache Weise eine mit der Vorrichtung maximal erreichbare elektrische Leistung ermittelt werden, da ein maximales Moment zwischen Rotor und Stator, bei welchem der Rotor nicht mitrotiert, abhängig von einer Neigung der Rotationsachse ist und bei einer Auslenkung der Rotationsachse aus einer Horizontalen abnimmt. Ist ein Neigungssensor vorgesehen, kann eine Lage der gedachten Ebene bzw. eine Lage des Rotors auf einfache Weise anhand einer durch die Vorrichtung abgegebenen Leistung bzw. eines Stromes durch die Spule ermittelt werden, welcher proportional zu einem Moment zwischen Rotor und Stator ist. Aus dem zwischen Rotor und Stator übertragenen Moment sowie der Neigung der Rotationsachse ergibt sich unmittelbar eine aktuelle Auslenkung der gedachten Ebene bzw. des Rotors, welche aus dem Moment folgt. Somit wird durch den Neigungssensor eine Regelung der Vorrichtung zur Erreichung einer optimalen Leistungsabgabe vereinfacht.

Üblicherweise ist der Neigungssensor als Beschleunigungssensor ausgebildet. Es können auch mehrere Beschleunigungssensoren zur Erfassung einer auf die Vorrichtung wirkenden Beschleunigung bzw. Schwerkraft in unterschiedlichen Raumrichtungen vorgesehen sein, um beispielsweise bei einer Kurvenfahrt oder einer beschleunigten Bergab- bzw. Bergaufbewegung ein maximal erreichbares Moment besonders genau zu bestimmen, bei welchem der Rotor gerade noch nicht mitrotiert. Mit Vorteil werden mindestens zwei senkrecht zueinander angeordnete Beschleunigungssensoren in einer auf die Rotationsachse senkrecht stehenden Ebene angeordnet und starr mit dem Stator verbunden, um den Schwerkraftvektor relativ zum Stator bzw. eine Lage der Rotationsachse besonders genau bestimmen zu können.

Es kann auch vorgesehen sein, dass ein Inertialsensor mit dem Stator verbunden ist, mit welchem Linearbeschleunigungen in drei senkrecht zueinander stehenden Raumrichtungen, Rotationsbeschleunigungen um drei senkrecht zueinander stehende Achsen sowie eine Stärke eines Magnetfeldes in den drei Raumrichtungen messbar sind. Dadurch ergeben sich neun Messgrößen zur besonders genauen Bestimmung einer Lage des Stators im Raum bzw. einer Bestimmung des Schwerkraftvektors relativ zum Stator, wobei auch ein Erdmagnetfeld berücksichtigt werden kann.

Zur Bestimmung einer Lage des Rotors relativ zum Stator bzw. einer Lage der Ebene im Raum bei bekannter Lage des Stators kann beispielsweise ein Winkelsensor vorgesehen sein, mit welchem ein Winkel zwischen Rotor und Stator messbar ist. Der Winkelsensor kann einen Hall-Sensor am Rotor und einen Magnetdipol am Stator umfassen, sodass mit dem Hall-Sensor über den Magnetdipol eine Auslenkung des Rotors gegenüber dem Stator gemessen werden kann. Es versteht sich, dass auch der Hall-Sensor am Stator und der Magnetdipol am Rotor angeordnet sein können. Dadurch können jederzeit die Lagen des Stators, des Rotors sowie der gedachten Ebene sowohl im Raum als auch relativ zum Schwerkraftvektor auf einfache Weise ermittelt werden.

Alternativ oder ergänzend kann eine Winkelmessung auch mittels eines aus dem Stand der Technik bekannten optischen Messverfahrens oder über die in den Spulen induzierten Spannungen erfolgen, um die Position bzw. Lage des Rotors im Raum sowie relativ zum Stator zu bestimmen.

Um ein Mitrotieren des Rotors bei einer starken Neigung der Vorrichtung zu verhindern, ist es günstig, wenn die Vorrichtung zur Begrenzung eines Stromes durch die Spule abhängig von einer Neigung der Rotationsachse ausgebildet ist. So ist bei einer horizontal ausgerichteten Rotationsachse ein maximales Moment erreichbar, während die Schwerkraft nicht stabilisierend auf den Rotor wirkt, wenn die Rotationsachse senkrecht ausgerichtet ist. Üblicherweise wird der Strom durch die Spule proportional zu einem stabilisierenden Effekt der Schwerkraft bzw. einem durch die Schwerkraft verursachten Moment zur Auslenkung des Rotors um die Rotationsachse begrenzt.

Um auch bei starker Neigung der Rotationsachse oder vertikaler Ausrichtung der Rotationsachse ein Mitrotieren des Rotors zu verhindern, ist es günstig, wenn eine Auslenkung der Ebene mittels einer Energie aus dem Energiespeicher beeinflussbar ist. Da bei starker Auslenkung bzw. einer vertikalen Ausrichtung der Rotationsachse eine stabilisierende Wirkung der Schwerkraft auf den Rotor fehlt, kann mit einer erfindungsgemäßen Vorrichtung eine derartige stabilisierende Wirkung durch einen gezielten Stromfluss in der zumindest einen Spule des Stators erreicht werden. Dadurch kann die Vorrichtung auch zur Reifendruckkontrolle im Rad eines Zweirades wie eines Motorrades eingesetzt werden, welches bei einer Kurvenfahrt stark geneigt wird.

Üblicherweise ist im Stator mehr als eine Spule vorgesehen. Um eine hohe Energieausbeute einerseits sowie eine besonders gute Beeinflussbarkeit einer Position des Rotors andererseits auf einfache Weise zu erreichen, ist es günstig, wenn zwei bis sechs, insbesondere drei Spulen im Stator vorgesehen sind. Wie bei rotierenden elektrischen Maschinen des Standes der Technik sind die Spulen dabei in der Regel gleichmäßig im Stator verteilt. Bei rotierenden elektrischen Maschinen sind im Unterschied zu Gleichstrommaschinen keine Bürsten zur Kommutierung erforderlich. Dadurch entfallen bei einer erfindungsgemäßen Vorrichtung die durch Bürsten verursachten Nachteile wie Verschleiß, Kurzlebigkeit, ein verringerter Wirkungsgrad aufgrund von Reibungsverlusten, Bürstenfeuer etc. Gleichzeitig ist ein Aufbringen eines Gegenmomentes zur Stabilisierung des Rotors bereits bei besonders niedriger Spannung möglich.

Eine Gleichrichtung der in der Spule induzierten Wechselspannung kann grundsätzlich auf verschiedenste Weise erfolgen, beispielsweise mittels Dioden oder Röhren. Zur gezielten Erreichung eines eine Auslenkung der gedachten Ebene beeinflussenden Stromflusses in der Spule bzw. den Spulen hat es sich als günstig erwiesen, wenn die Schaltung zumindest einen Transistor, insbesondere einen MOSFET, zur Gleichrichtung der in der Spule induzierten Spannung aufweist. Mittels eines Schalters wie eines Transistors kann gezielt eine Last einer Spule zugeschaltet werden, um beispielsweise abhängig von einer aktuellen Auslenkung der gedachten Ebene einen Stromfluss in der Spule und somit über ein durch den Stromfluss hervorgerufenes Magnetfeld eine Beeinflussung der Position des Rotors bzw. der Position der gedachten Ebene zu erreichen. Üblicherweise werden sämtliche Spulen zur Gleichrichtung mit Transistoren verbunden. Wie bei rotierenden elektrischen Maschinen üblich, kann vorgesehen sein, dass die Spulen des Stators zu einer Stern- oder Dreiecksschaltung verbunden sind, sodass zur Gleichrichtung der in den Spulen induzierten Spannungen bei drei Spulen nur sechs Transistoren erforderlich sind.

Mit Vorteil werden als MOSFET ausgebildete Transistoren eingesetzt, welche auch Metall-Oxid-Halbleiter-Feldeffekttransistoren genannt werden, da diese beispielsweise verglichen mit herkömmlichen Dioden einen sehr geringen Spannungsabfall aufweisen. Dadurch können bereits niedrige Spannungen für elektrische Verbraucher genutzt werden, welche bei niedrigen Drehzahlen des Stators relativ zum Rotor und/oder einem geringen Außendurchmesser des Stators auftreten. Bei Einsatz der Vorrichtung in einem Rad eines Kraftfahrzeuges ist somit bereits bei geringen Geschwindigkeiten eine Energieerzeugung durch die Vorrichtung zum Betreiben eines Reifendrucksensors möglich.

Zur Gleichrichtung sind üblicherweise Anschlussklemmen der Spulen mit Anschlusspunkten in der Schaltung verbunden, welche über jeweils einen Transistor mit einer ersten Spannungsebene und einen weiteren Transistor mit einer zweiten Spannungsebene eines Zwischenkreises der Schaltung verbunden sind. Mit dem Zwischenkreis, welcher auch als Gleichstromkreis bezeichnet werden kann, ist normalerweise der Energiespeicher verbunden, sodass eine Spannung zwischen erster Spannungsebene und zweiter Spannungsebene einer Spannung des Energiespeichers entspricht. Die Spannung zwischen erster Spannungsebene und zweiter Spannungsebene ist somit in der Regel eine Gleichspannung oder eine Mischspannung mit hohem Gleichspannungsanteil. Um sicherzustellen, dass der Energiespeicher durch eine in den Spulen induzierte Spannung geladen wird, ist es günstig, wenn ein mit dem Transistor sowie einem Zwischenkreis und der Spule verbundener Operationsverstärker vorgesehen ist, sodass durch den Operationsverstärker ein Schalten des Transistors abhängig von einer Spannung zwischen der Spule und dem Zwischenkreis erfolgen kann. Dadurch wird auf einfache Weise ein unerwünschter Stromfluss vom Energiespeicher in die Spule verhindert, da die Transistoren erst dann durch die Operationsverstärker geschaltet werden, wenn eine Spannung der Spule über einem Spannungsniveau der jeweiligen Spannungsebene des Zwischenkreises liegt.

Alternativ oder ergänzend kann auch ein Mikrocontroller zur Ansteuerung des Transistors vorgesehen sein. Es versteht sich, dass bei Einsatz mehrerer Transistoren sämtliche Transistoren durch einen oder mehrere Mikrocontroller angesteuert sein können. Dadurch wird unter anderem ein gezielter Stromfluss vom Energiespeicher in die Spule beispielsweise zur Stabilisierung einer Position des Rotors auf einfache Weise möglich.

Um auch eine bei geringen Drehzahlen erzeugte niedrige Spannung nutzen zu können, ist es günstig, wenn ein Spannungswandler, insbesondere ein Step-Up-Converter, vorgesehen ist, um eine Ausgangsspannung des Zwischenkreises auf einen höheren Wert zu transformieren. Beispielsweise kann ein derartiger Spannungswandler zur Bereitstellung einer bei niedrigen Drehzahlen eine höhere Spannung als der Zwischenkreis aufweisenden Systemspannungsebene genutzt werden, von welcher aus Bauelemente wie Operationsverstärker zur Ansteuerung der Transistoren versorgt werden. Dadurch ist es möglich, bereits bei sehr niedrigen Spannungen bzw. niedrigen Drehzahlen eine Gleichrichtung mit hoher Effizienz zu erreichen.

Wenngleich verschiedenste Möglichkeiten zum Einsatz einer erfindungsgemäßen Vorrichtung bestehen, ist es besonders günstig, wenn bei einer Felge, insbesondere einer Autofelge, mit einer Vorrichtung zur Erzeugung elektrischer Energie aus einer Rotationsbewegung die Vorrichtung erfindungsgemäß ausgebildet ist. Einerseits ist somit eine höhere elektrische Leistung erreichbar als mit piezoelektrischen Einrichtungen des Standes der Technik, sodass neben einem Reifendrucksensor weitere elektrische Einrichtungen im Rad betrieben werden können. Andererseits ist die Vorrichtung auch besonders robust und für einen Einsatz bei unterschiedlichsten Temperaturen und Einsatzbedingungen geeignet.

Bei einem Einsatz der Vorrichtung an bzw. in einer Felge eines Fahrzeuges hat es sich bewährt, dass die Vorrichtung im Zentrum der Felge angeordnet ist, sodass eine Rotationsachse der Felge mit der Rotationsachse der Vorrichtung zusammenfällt. Dadurch führt eine Anordnung der Vorrichtung in der Felge zu keiner Unwucht der Felge, sodass ein hoher Fahrkomfort erreicht wird. Darüber hinaus wird durch eine Positionierung der Vorrichtung im Zentrum der Felge ein optisches Erscheinungsbild der Felge nicht beeinträchtigt, wenn die Vorrichtung entsprechend klein ausgebildet ist. Üblicherweise ist die Vorrichtung mit einem Außendurchmesser von weniger als 15 cm ausgebildet, sodass die Vorrichtung in einer Ausnehmung der Felge zwischen Befestigungsschrauben angeordnet werden kann, mit welchen die Felge am Fahrzeug befestigt wird.

Günstig ist es, wenn ein Sensor zur Erfassung einer physikalischen Eigenschaft eines an der Felge angebrachten Reifens, insbesondere ein Drucksensor, vorgesehen ist, welcher zur Energieversorgung mit der Vorrichtung verbunden ist. Dadurch kann die Vorrichtung für eine Reifendruckkontrolle eingesetzt werden.

Zur Übermittlung einer mit dem Sensor erfassten physikalischen Eigenschaft beispielsweise an eine Bordelektronik des Fahrzeuges ist bevorzugt vorgesehen, dass eine Einrichtung zur kabellosen Datenübertragung vorgesehen ist. In der Regel ist dann in einem nicht rotierenden Teil des Fahrzeuges ein entsprechender Empfänger vorgesehen, welcher die Daten an die Bordelektronik weiterleitet. Dabei kann die Übertragung beispielsweise mittels Funk oder Induktion erfolgen, wobei auch ein Nachrüsten bestehender Fahrzeuge mit entsprechenden Datenübertragungseinrichtungen möglich ist. Erfolgt die Datenübertragung mittels Induktion durch gegenüberliegende Spulen bzw. Schleifen wird eine hohe Störunempfindlichkeit erreicht, sodass auch sicherheitsrelevante Daten übertragen werden können.

Da mit einer erfindungsgemäßen Vorrichtung eine wesentlich höhere elektrische Leistung erzeugt werden kann als mit piezoelektrischen Vorrichtungen des Standes der Technik, hat es sich als vorteilhaft erwiesen, wenn ein Kompressor zur Beeinflussung eines Reifendruckes vorgesehen ist, wobei der Kompressor zur Energieversorgung mit der Vorrichtung verbunden ist. Dadurch kann die Vorrichtung nicht nur zur Reifendruckkontrolle, sondern auch zur Beeinflussung des Reifendruckes eingesetzt werden. So kann der Kompressor genau dann aktiviert werden, wenn ein Reifendruck unter einen definierten Grenzwert abfällt. Selbstverständlich können auch weitere Aktoren vorgesehen sein, beispielsweise um einen Reifendruck bei Bedarf gezielt zu reduzieren, wenn dies erforderlich ist.

Die weitere Aufgabe wird erfindungsgemäß dadurch gelöst, dass die erfindungsgemäße Vorrichtung zur Erzeugung elektrischer Energie in einem Rad eines Kraftfahrzeuges verwendet wird. Somit kann eine Energieausbeute erreicht werden, wobei auch bei verschiedensten Betriebsbedingungen wie einer Neigung des Rades ein Maximum an elektrischer Energie erzeugt werden kann.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:

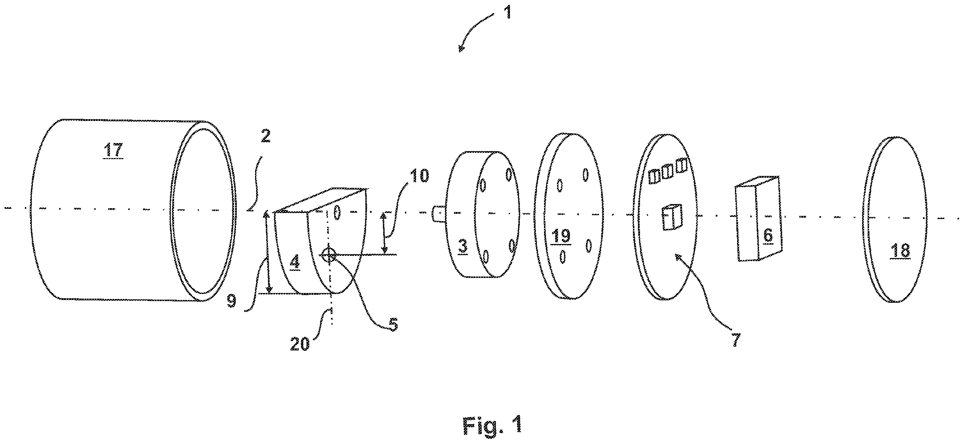

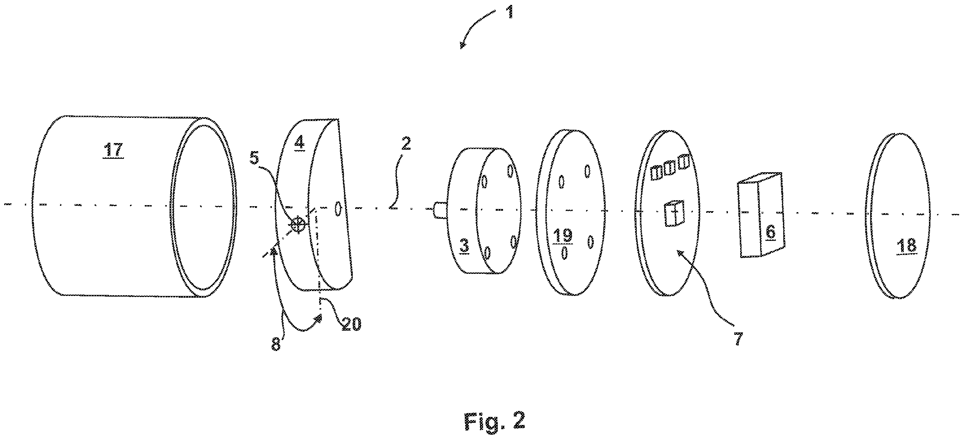

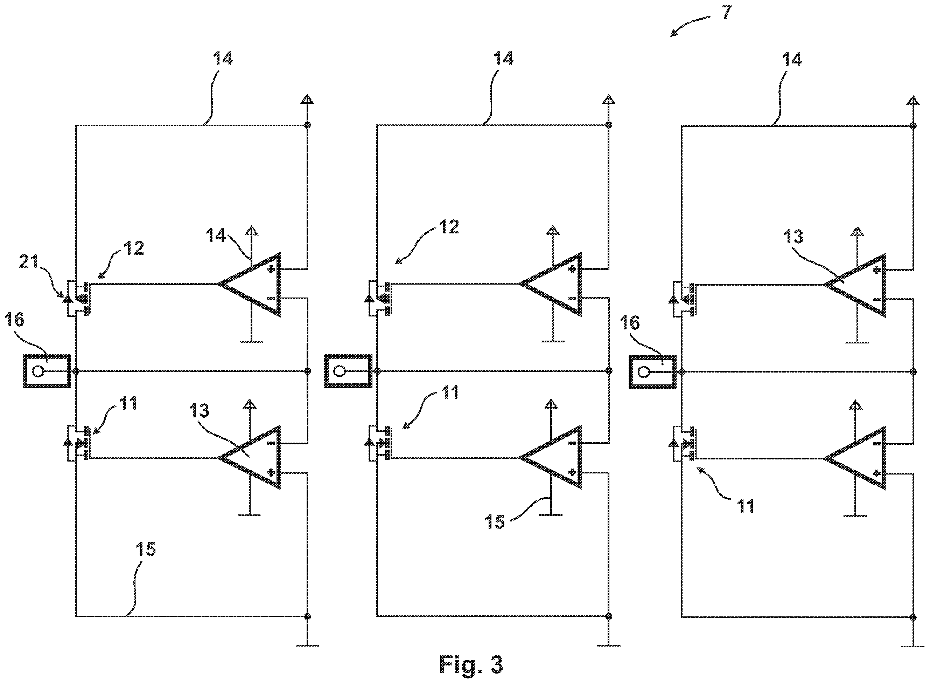

Fig. 1 und 2 eine erfindungsgemäße Vorrichtung in unterschiedlichen Betriebszuständen; Fig. 3 bis 5 verschiedene Ausführungsbeispiele einer elektrischen Schaltung einer erfindungsgemäßen Vorrichtung.

Fig. 1 und 2 zeigen schematisch eine Explosionsdarstellung einer erfindungsgemäßen Vorrichtung 1 zur Erzeugung elektrischer Energie aus einer Rotationsbewegung in unterschiedlichen Betriebszuständen. Wie ersichtlich weist die Vorrichtung 1 eine rotierende elektrische Maschine mit einem Rotor 4 mit einem etwa halbkreisförmigen Querschnitt auf. Des Weiteren ist ein um eine Rotationsachse 2 drehbar mit dem Rotor 4 verbundener Stator 3 vorgesehen, in welchem drei nicht dargestellte Spulen zur Induktion einer elektrischen Spannung bei einer Relativdrehung zwischen Rotor 4 und Stator 3 angeordnet sind. Hierzu sind im Rotor 4 Permanentmagnete vorgesehen. Um auch bei kleinen Abmessungen bzw. niedrigen Drehzahlen eine möglichst hohe elektrische Spannung zu erreichen, sind in der Regel mehrere Permanentmagnete vorgesehen, sodass der Rotor 4 vorzugsweise eine Polpaarzahl von 2 bis 20 aufweist. Beim dargestellten Rotor 4 beträgt die Polpaarzahl zwölf.

Zur Verbindung der Vorrichtung 1 mit einem rotierenden System, in welchem die Vorrichtung 1 zur Erzeugung elektrischer Energie positioniert wird, ist eine etwa hohlzylindrische Außenschale 17 vorgesehen. Diese Außenschale 17 kann beispielsweise in einem Zentrum einer Felge eines Rades eines Fahrzeuges in einer zentralen Ausnehmung angeordnet und starr mit der Felge verbunden werden, sodass die Außenschale 17 mit der Felge rotiert. In dem Fall fällt eine Rotationsachse 2 der Felge mit einer Rotationsachse 2 der Vorrichtung 1 zusammen. Die Außenschale 17 ist über ein Verbindungselement 19 starr mit dem Stator 3 verbunden, sodass bei einem Betrieb der Vorrichtung 1 in einem rotierenden System wie einer Felge der Stator 3 eine Rotationsgeschwindigkeit des rotierenden Systems aufweist. Die Bezeichnungen Rotor 4 und Stator 3 entsprechen somit zwar der bei rotierenden elektrischen Maschinen üblichen Nomenklatur, weisen jedoch im Unterschied zu stationären rotierenden elektrischen Maschinen hier nicht auf ein kinematisches Verhalten der jeweiligen Bauteile bei einem Betrieb der Vorrichtung 1 hin.

Bei einem Stillstand der Vorrichtung 1 oder einem Betrieb, bei welchem zwischen Rotor 4 und Stator 3 kein Moment übertragen wird, sodass durch die Spulen des Stators 3 auch kein Strom fließt, befindet sich der Rotor 4 in einer Ruhelage wie in Fig. 1 abgebildet, wobei ein Schwerpunkt 5 des Rotors 4 senkrecht unter der Rotationsachse 2 liegt. Eine gedachte Ebene, welche durch die Rotationsachse 2 und den Schwerpunkt 5 des Rotors 4 definiert ist bzw. die Rotationsachse 2 und den Schwerpunkt 5 enthält, liegt somit in der Ruhelage vertikal, sodass ein Auslenkungswinkel in der Ruhelage 0° beträgt.

Aufgrund des etwa halbkreisförmigen Querschnittes des Rotors 4 liegt der Schwerpunkt 5 des Rotors 4 nicht auf der Rotationsachse 2, sodass sich ein Abstand 10 zwischen dem Schwerpunkt 5 des Rotors 4 und der Rotationsachse 2 ergibt. Ein maximaler Abstand 9 des Rotors 4 von der Rotationsachse 2 entspricht einem Radius des halbkreisförmigen Querschnittes. Üblicherweise entspricht ein Verhältnis des Abstandes 10 des Schwerpunktes 5 zur Rotationsachse 2 zu einem maximalen Abstand 9 des Rotors 4 von der Rotationsachse 2 mehr als 10 %, vorzugsweise 30 % bis 50 %, insbesondere etwa 40 %. Dadurch ist ein besonders hohes Moment zur Auslenkung des Rotors 4 aus der Ruhelage erforderlich, wodurch mit der Vorrichtung 1 eine hohe elektrische Leistung erzeugt werden kann.

Wird elektrische Energie erzeugt, sodass durch die Spulen ein Strom fließt, bewirkt ein vom Stator 3 auf den Rotor 4 übertragenes Moment eine Auslenkung des Rotors 4, welcher auch als Inertialmasse bezeichnet werden kann. Dabei ist ein maximales Moment bzw. eine maximale Leistung dann erreicht, wenn die gedachte Ebene um einen Auslenkungswinkel 8 von 90° aus der Ruhelage ausgelenkt ist bzw. der Schwerpunkt 5 des Rotors 4 auf gleicher Höhe mit der Rotationsachse 2 ist. Ein derartiger Betriebszustand, bei dem der Auslenkungswinkel 8, um welchen die gedachte Ebene aus einer Senkrechten 20 ausgelenkt ist, etwa 90° beträgt, ist in Fig. 2 wieder in Explosionsdarstellung dargestellt.

Die Vorrichtung 1 ist zur Erfassung und Beeinflussung einer Lage der Ebene mittels eines Stromflusses durch die zumindest eine Spule im Stator 3 ausgebildet. Hierzu ist eine Schaltung 7 vorgesehen, mit welcher zur Beeinflussung einer Lage der gedachten Ebene ein definierter Stromfluss durch die Spulen erreicht werden kann. Die elektronische Schaltung 7 ist starr mit dem Stator 3 verbunden und wie der Stator 3 ebenfalls für eine dauerhafte Belastung mit Fliehkräften ausgebildet, welche bei einer bei Rädern eines Kraftfahrzeuges üblichen Drehzahl auftreten können. Die elektrische Schaltung 7 dient auch zur Gleichrichtung einer in den Spulen induzierten Wechselspannung. Hierzu ist ein mit einem Zwischenkreis verbundener Energiespeicher 6 wie ein Akkumulator, ein Kondensator oder eine Batterie vorgesehen. Zum Schutz der Vorrichtung 1 vor Verunreinigungen ist ein Deckel 18 vorgesehen, welcher dicht mit der Außenschale 17 abschließt.

Fig. 3 zeigt ein Ausführungsbeispiel einer Schaltung 7 der in Fig. 1 dargestellten Vorrichtung 1. Dabei sind einerseits drei Anschlusspunkte 16 zum Anschluss der Spulen des Stators 3 vorgesehen, welche üblicherweise zu einer Dreiecksschaltung oder einer Sternschaltung verbunden sind. Andererseits ist ein Zwischenkreis ersichtlich, mit welchem ein nicht dargestellter Energiespeicher 6 verbunden ist. Der Zwischenkreis weist somit eine erste Spannungsebene 14 und eine zweite Spannungsebene 15 auf, wobei ein Potenzialunterschied zwischen der ersten Spannungsebene 14 und der zweiten Spannungsebene 15 einer Spannung des Energiespeichers 6 entspricht. Zur Gleichrichtung der in den Spulen induzierten Spannungen sind je Anschlusspunkt 16 zwei als MOSFETs 11, 12 ausgebildete Transistoren vorgesehen, wobei im dargestellten Ausführungsbeispiel jeweils zwischen einem Anschlusspunkt 16 und der ersten Spannungsebene 14, welche ein höheres Potenzial als die zweite Spannungsebene 15 aufweist, ein p-Kanal-MOSFET 12 und zwischen jeweils einem Anschlusspunkt 16 und der zweiten Spannungsebene 15 ein n-Kanal-MOSFET 11 vorgesehen ist. Es werden jeweils normal sperrende MOSFETs 11, 12 eingesetzt, wobei parallel zu jedem MOSFET 11, 12 eine Freilaufdiode 21 vorgesehen ist.

Zur Ansteuerung der MOSFETs 11, 12 ist je MOSFET 11, 12 ein Operationsverstärker 13 vorgesehen, welcher als Komparator zum Vergleich einer Spannung des Anschlusspunktes 16 mit einer Spannung der Spannungsebene 14, 15 eingesetzt ist, mit welcher der jeweilige MOSFET 11, 12 den Anschlusspunkt 16 verbindet. Dadurch wird der jeweilige MOSFET 11, 12 genau dann durch den Operationsverstärker 13 geschaltet bzw. leitend, wenn eine Spannung zwischen dem Anschlusspunkt 16 und erster Spannungsebene 14 positiv bzw. eine Spannung zwischen Anschlusspunkt 16 und zweiter Spannungsebene 15 negativ ist. Somit wird ein unerwünschtes Entladen des Energiespeichers 6 durch einen Stromfluss vom Energiespeicher 6 in die Spule verhindert.

Eine Spannungsversorgung der Operationsverstärker 13 erfolgt bei der dargestellten Schaltung 7 über den Zwischenkreis bzw. den Energiespeicher 6. Ist im Energiespeicher 6 keine Energie gespeichert, werden die MOSFETs 11, 12 durch die Operationsverstärker 13 nicht geschaltet, da für die Operationsverstärker 13 in dem Fall keine ausreichende Versorgungsspannung zur Verfügung steht. Dadurch erfolgt ein Gleichrichten der in den Spulen induzierten Spannung über die Freilaufdioden 21, welche parallel zu den MOSFETs 11, 12 geschaltet sind. Die Schaltung 7 funktioniert daher bei leerem Energiespeicher 6 erst ab einer Spannung, welche höher als eine Schwellspannung der Dioden ist, üblicherweise ab etwa 0,7 V. Ab diesem Zeitpunkt wird der Energiespeicher 6 geladen.

Sofern im Energiespeicher 6 Energie gespeichert ist, ist eine entsprechende Spannung zur Überwindung einer Schwellspannung der Dioden zwischen Anschlusspunkt 16 und erster Spannungsebene 14 bzw. zweiter Spannungsebene 15 nicht erforderlich, da die Operationsverstärker aus dem Energiespeicher mit Energie versorgt werden und die MOSFETs mit niedrigem Spannungsabfall ansteuern können. Dadurch kann bereits eine Spannung von beispielsweise 0,1 V gleichgerichtet und zur Energieentnahme genutzt werden. Dadurch wird eine besonders hohe Effizienz auch bei niedrigen Drehzahlen erreicht.

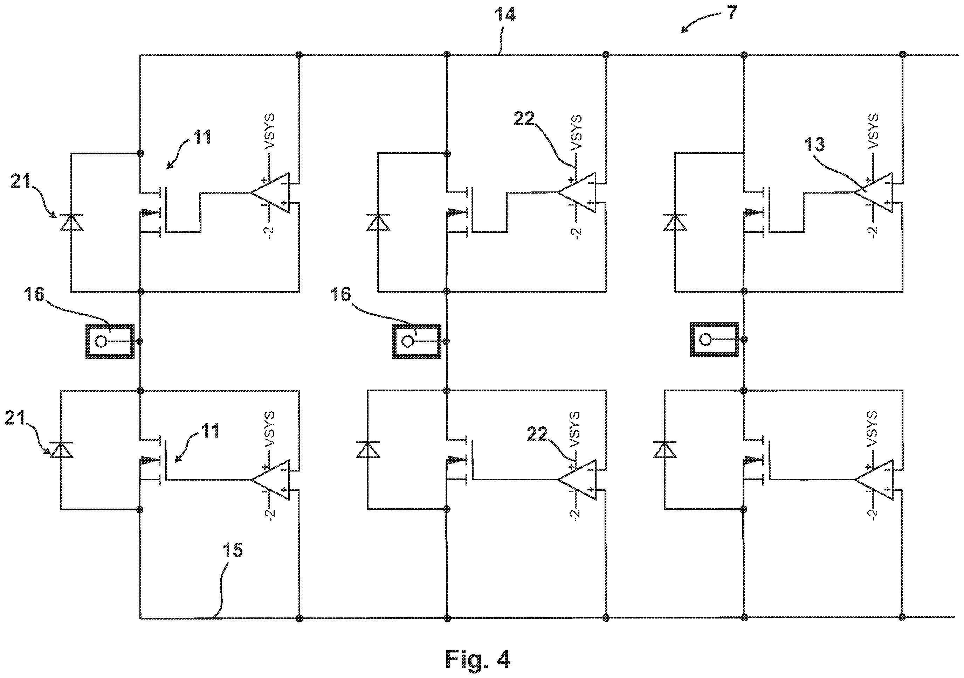

Fig. 4 zeigt ein weiteres Ausführungsbeispiel einer Schaltung 7 einer Vorrichtung 1 gemäß Fig. 1. Im Unterschied zu der in Fig. 3 dargestellten Schaltung 7 sind hier ausschließlich n-Kanal-MOSFETs 11 sowohl zwischen den Anschlusspunkten 16 und der ersten Spannungsebene 14 als auch zwischen den Anschlusspunkten 16 und der zweiten Spannungsebene 15 vorgesehen. Darüber hinaus ist eine zusätzliche Systemspannungsebene 22 vorgesehen, welche durch einen nicht dargestellten Spannungswandler wie einen sogenannten Step-Up-Converter mit dem Zwischenkreis verbunden ist. Aufgrund des Spannungswandlers liegt auf der Systemspannungsebene 22 eine höhere Spannung an als an der ersten Spannungsebene 14 des Zwischenkreises. Bei der dargestellten Schaltung 7 wird eine positive Versorgungsspannung der Operationsverstärker 13 im Unterschied zu der in Fig. 3 dargestellten Schaltung 7 nicht durch die erste Spannungsebene 14, sondern durch die Systemspannungsebene 22 bereitgestellt. Als negative Versorgungsspannung der Operationsverstärker 13 kann wie bei der in Fig. 3 dargestellten Schaltung 7 die zweite Spannungsebene 15 genutzt werden.

Da die Operationsverstärker 13 hier nicht über den Zwischenkreis, sondern über die Systemspannungsebene 22 mit Energie versorgt werden, ist verglichen mit der in Fig. 1 dargestellten Schaltung 7 ein Schalten der MOSFETs 11, 12 auch bei leerem Energiespeicher 6 bereits bei einer Spannung im Zwischenkreis möglich, welche geringer als die Schwellspannung der Dioden ist. Dadurch wird auch bei leerem Energiespeicher bereits ab einer Zwischenkreisspannung von etwa 0,1 V, der Schwellspannung der MOSFETs, eine besonders hohe Effizienz erreicht.

Mittels des Step-Up-Converters wird ab einer Spannung des Zwischenkreises von etwa 0,1 V auf der Systemspannungsebene 22 je nach Konfiguration eine Spannung von konstant etwa 2,8 V bis 4,1 V erreicht. Bei steigender Drehzahl bzw. steigender Relativgeschwindigkeit zwischen Rotor 4 und Stator 3 steigt die Spannung im Zwischenkreis aufgrund der steigenden Spannung in den Spulen des Stators 3, sodass eine Spannungsdifferenz zwischen der Systemspannungsebene 22 und dem Zwischenkreis bzw. der ersten Spannungsebene 14 mit steigender Drehzahl sinkt. Wenn diese Spannungsdifferenz weniger als 0,6 V beträgt, können die mit der ersten Spannungsebene 14 verbundenen MOSFETs 11 nicht mehr durch die Operationsverstärker 13 geschaltet werden, wodurch ein Spannungsabfall entsteht. Dies ist von Vorteil, da bei hohen Drehzahlen ohnedies eine zu hohe Energiemenge zur Verfügung steht, sodass Beschädigungen von elektrischen Verbrauchern vermieden werden.

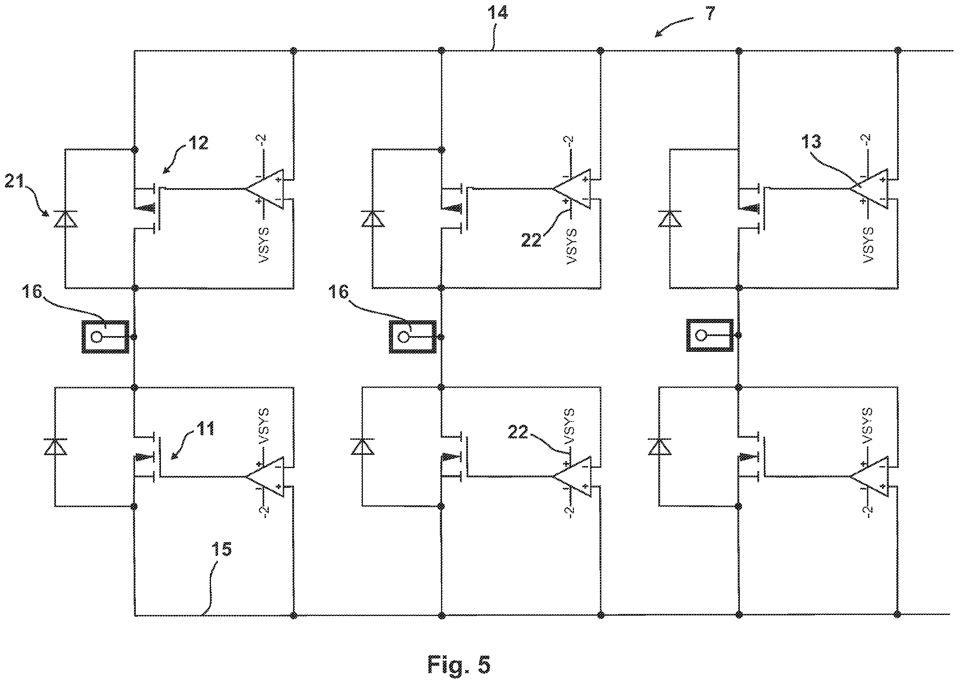

Fig. 5 zeigt ein weiteres Ausführungsbeispiel einer Schaltung 7 für eine Vorrichtung 1 nach Fig. 1. Analog zu der in Fig. 3 dargestellten Schaltung 7 sind auch hier p-Kanal-MOSFETs 12 zwischen den Anschlusspunkten 16 und der ersten Spannungsebene 14 und n-Kanal-MOSFETs 11 zwischen den Anschlusspunkten 16 und der zweiten Spannungsebene 15 vorgesehen. Abweichend von der Schaltung 7 nach Fig. 3 ist bei dieser Schaltung 7 ein Gleichspannungswandler bzw. ein Step-Up-Converter vorgesehen, welcher eine Spannung des Zwischenkreises zwischen erster Spannungsebene 14 und zweiter Spannungsebene 15 auf ein höheres Niveau transformiert, sodass eine Systemspannungsebene 22 mit höherer Spannung bereitgestellt wird, um die Operationsverstärker 13 bereits bei einer geringen Spannung des Zwischenkreises mit Energie zu versorgen. Bei dieser Ausführung werden aufgrund der höheren Systemspannungsebene 22 zwar die n-Kanal-MOSFETs 11 bereits bei einer geringen Spannung des Zwischenkreises geschaltet, jedoch wäre für ein Schalten der p-Kanal-MOSFETs 12 eine negative Versorgungsspannung der Operationsverstärker 13 erforderlich, weswegen die p-Kanal-MOSFETs 12 zwischen den Anschlusspunkten 16 und der ersten Spannungsebene 14 erst bei höheren Drehzahlen durch die Operationsverstärker 13 geschaltet werden.

Eine erfindungsgemäße Vorrichtung 1 ermöglicht ein Erzeugen von elektrischer Energie durch eine Rotationsbewegung mit besonders hoher Effizienz, da bereits geringe Spannungen, welche bei niedrigen Drehzahlen und einer kleinen Baugröße erreicht werden, genutzt werden können. Aufgrund des bevorzugten Einsatzes einer rotierenden elektrischen Maschine, welche bürstenlos ausgebildet ist, werden eine hohe Zuverlässigkeit, Langlebigkeit, ein geringer Verschleiß sowie ein besonders hoher Wirkungsgrad erreicht. Beispielsweise kann ein sogenannter bürstenloser Gleichstrommotor eingesetzt werden. Darüber hinaus wird mit einer erfindungsgemäßen Vorrichtung 1 gewährleistet, dass ein Mitrotieren des Rotors 4, und somit eine Beschädigung desselben durch Fliehkräfte, verhindert wird. Dadurch kann die Vorrichtung 1 auch in einem Rad eines Kraftfahrzeuges eingesetzt werden, beispielsweise um einen Reifendrucksensor und einen Kompressor zur Beeinflussung des Reifendruckes mit Energie zu versorgen. Verglichen mit Vorrichtungen 1 des Standes der Technik, welche elektrische Energie mittels eines piezoelektrischen Effektes erzeugen, kann mit einer erfindungsgemäßen Vorrichtung 1 eine wesentlich größere Energieausbeute erreicht werden. Durch den erzielbaren kleinen Bauraum kann die erfindungsgemäße Vorrichtung 1 im Zentrum einer Felge eines Kraftfahrzeuges eingesetzt werden, wodurch eine Unwucht des Rades nicht erhöht und ein optisches Erscheinungsbild nicht beeinträchtigt werden.

## Patentansprüche

1. Vorrichtung (1) zur Erzeugung elektrischer Energie aus einer Rotationsbewegung, aufweisend einen um eine Rotationsachse (2) drehbaren Stator (3) und einen um die Rotationsachse (2) drehbar mit dem Stator (3) verbundenen Rotor (4), welcher einen außerhalb der Rotationsachse (2) liegenden Schwerpunkt (5) aufweist, wobei im Stator (3) eine Spule zur Induktion einer elektrischen Spannung bei einer Rotation des Stators (3) relativ zum Rotor (4) angeordnet ist, wobei mit der Spule eine elektrische Schaltung (7) mit einem Energiespeicher (6) zur Gleichrichtung der in der Spule induzierten Spannung verbunden ist, **dadurch gekennzeichnet, dass** die Vorrichtung (1) zur Erfassung einer Lage einer durch die Rotationsachse (2) und den Schwerpunkt (5) des Rotors (4) definierten Ebene und zur Beeinflussung der Lage der Ebene mittels eines Stromflusses durch die Spule eingerichtet ist, sodass durch den Stromfluss eine Auslenkung der Ebene aus einer Vertikalen bei einer Rotation des Stators (3) begrenzbar ist.

2. Vorrichtung (1) nach Anspruch 1, **dadurch gekennzeichnet, dass** eine Auslenkung der Ebene auf einen Auslenkungswinkel (8) von maximal 180°, insbesondere maximal 90°, aus einer Ruhelage begrenzt ist.

3. Vorrichtung (1) nach Anspruch 1 oder 2, **dadurch gekennzeichnet, dass** ein Abstand (10) des Schwerpunktes (5) des Rotors (4) von der Rotationsachse (2) mehr als 10 %, vorzugsweise mehr als 20 %, insbesondere mehr als 40 %, eines maximalen Abstandes (9) des Rotors (4) von der Rotationsachse (2) entspricht.

4. Vorrichtung (1) nach einem der Ansprüche 1 bis 3, **dadurch gekennzeichnet, dass** der Stator (3) für eine Rotation um die Rotationsachse (2) mit einer Drehzahl von mehr als 100 1/min, vorzugsweise mehr als 500 1/min, insbesondere mehr als 1500 1/min, ausgebildet ist.

5. Vorrichtung (1) nach Anspruch 1 oder 4, **dadurch gekennzeichnet, dass** ein Neigungssensor zur Erfassung einer Neigung der Rotationsachse (2) vorgesehen ist.

6. Vorrichtung (1) nach einem der Ansprüche 1 bis 5, **dadurch gekennzeichnet, dass** die Vorrichtung (1) zur Begrenzung eines Stromes durch die Spule abhängig von einer Neigung der Rotationsachse (2) ausgebildet ist.

7. Vorrichtung (1) nach einem der Ansprüche 1 bis 6, **dadurch gekennzeichnet, dass** eine Auslenkung der Ebene mittels einer Energie aus dem Energiespeicher (6) beeinflussbar ist.

8. Vorrichtung (1) nach einem der Ansprüche 1 bis 7, **dadurch gekennzeichnet, dass** zwei bis sechs, insbesondere drei Spulen im Stator (3) vorgesehen sind.

9. Vorrichtung (1) nach einem der Ansprüche 1 bis 8, **dadurch gekennzeichnet, dass** die Schaltung (7) zumindest einen Transistor, insbesondere einen MOSFET (11, 12), zur Gleichrichtung der in der Spule induzierten Spannung aufweist.

10. Vorrichtung (1) nach Anspruch 9, **dadurch gekennzeichnet, dass** ein mit dem Transistor sowie einem Zwischenkreis und der Spule verbundener Operationsverstärker (13) vorgesehen ist, sodass durch den Operationsverstärker (13) ein Schalten des Transistors abhängig von einer Spannung zwischen der Spule und dem Zwischenkreis erfolgen kann.

11. Vorrichtung (1) nach Anspruch 9, **dadurch gekennzeichnet, dass** ein Mikrocontroller zur Ansteuerung des Transistors vorgesehen ist.

12. Vorrichtung (1) nach einem der Ansprüche 1 bis 11, **dadurch gekennzeichnet, dass** ein Spannungswandler, insbesondere ein Step-Up-Converter, vorgesehen ist, um eine Ausgangsspannung des Zwischenkreises auf einen höheren Wert zu transformieren.

13. Felge, insbesondere Autofelge, mit einer Vorrichtung (1) zur Erzeugung elektrischer Energie aus einer Rotationsbewegung, **dadurch gekennzeichnet, dass** die Vorrichtung (1) nach einem der Ansprüche 1 bis 12 ausgebildet ist.

14. Felge nach Anspruch 13, **dadurch gekennzeichnet, dass** die Vorrichtung (1) im Zentrum der Felge angeordnet ist, sodass eine Rotationsachse (2) der Felge mit der Rotationsachse (2) der Vorrichtung (1) zusammenfällt.

15. Felge nach Anspruch 14, **dadurch gekennzeichnet, dass** ein Sensor zur Erfassung einer physikalischen Eigenschaft eines an der Felge angebrachten Reifens, insbesondere ein Drucksensor, vorgesehen ist, welcher zur Energieversorgung mit der Vorrichtung (1) verbunden ist.

16. Felge nach Anspruch 14 oder 15, **dadurch gekennzeichnet, dass** eine Einrichtung zur kabellosen Datenübertragung vorgesehen ist.

17. Felge nach einem der Ansprüche 14 bis 16, **dadurch gekennzeichnet, dass** ein Kompressor zur Beeinflussung eines Reifendruckes vorgesehen ist, wobei der Kompressor zur Energieversorgung mit der Vorrichtung (1) verbunden ist.

18. Verwendung einer Vorrichtung (1) nach einem der Ansprüche 1 bis 12 zur Erzeugung elektrischer Energie in einem Rad eines Kraftfahrzeuges.

## Claims

1. An apparatus (1) for generating electrical energy from a rotational movement, comprising a stator (3) rotatable about a rotational axis (2) and a rotor (4) which is connected to the stator (3) in such a manner that said rotor can rotate about the rotational axis (2), which rotor has a centre of gravity (5) located outside the rotational axis (2), wherein a coil is arranged in the stator (3) for inducing an electrical voltage when the stator (3) rotates relative to the rotor (4), wherein the coil is connected to an electrical circuit (7) having an energy storage device (6) for rectifying the voltage induced in the coil, **characterized in that** the apparatus (1) is configured to detect a position of a plane defined by the rotational axis (2) and the centre of gravity (5) of the rotor (4) and to influence the position of the plane by means of a current flowing through the coil, such that a deflection of the plane from a vertical plane during a rotation of the stator (3) can be limited by the current flow.

2. The apparatus (1) according to Claim 1, **characterized in that** a deflection of the plane is limited to an angle of deflection (8) of no more than 180°, in particular no more than 90°.

3. The apparatus (1) according to Claim 1 or 2, **characterized in that** a distance (10) of the centre of gravity (5) of the rotor (4) from the rotational axis (2) is equivalent to more than 10 %, preferably more than 20 %, in particular more than 40 %, of the maximum distance (9) of the rotor (4) from the rotational axis (2).

4. The apparatus (1) according to any one of Claims 1 to 3, **characterized in that** the stator (3) is designed for a rotation about the rotational axis (2) with a rotational speed of more than 100 rpm, preferably more than 500 rpm, in particular more than 1,500 rpm.

5. The apparatus (1) according to Claim 1 or 4, **characterized in that** an inclination sensor is provided for capturing an inclination of the rotational axis (2).

6. The apparatus (1) according to any one of Claims 1 to 5, **characterized in that** the apparatus (1) is designed to limit a current through the coil in dependence on an inclination of the rotational axis (2).

7. The apparatus (1) according to any one of Claims 1 to 6, **characterized in that** a deflection of the plane can be influenced by means of an energy from the energy storage device (6).

8. The apparatus (1) according to any one of Claims 1 to 7, **characterized in that** two to six, in particular three, coils are provided in the stator (3).

9. The apparatus (1) according to any one of Claims 1 to 8, **characterized in that** the circuit (7) has at least one transistor, in particular a MOSFET (11, 12), for rectifying the voltage induced in the coil.

10. The apparatus (1) according to Claim 9, **characterized in that** an operational amplifier (13) connected to the transistor, as well as to an intermediate circuit and the coil, is provided, such that the operational amplifier (13) can be used to switch the transistor in dependence on a voltage between the coil and the intermediate circuit.

11. The apparatus (1) according to Claim 9, **characterized in that** a micro-controller is provided to control the transistor.

12. The apparatus (1) according to any one of Claims 1 to 11, **characterized in that** a voltage converter, in particular a step-up converter, is provided to transform an output voltage of the intermediate circuit to a higher value.

13. A wheel rim, in particular an automobile wheel rim, having an apparatus (1) for generating electrical energy from a rotational movement, **characterized in that** the apparatus (1) is designed according to any one of Claims 1 to 12.

14. The wheel rim according to Claim 13, **characterized in that** the apparatus (1) is arranged in the centre of the wheel rim, such that a rotational axis (2) of the wheel rim coincides with the rotational axis (2) of the apparatus (1).

15. The wheel rim according to Claim 14, **characterized in that** a sensor is provided for capturing a physical characteristic of a tire attached to the wheel rim, in particular a pressure sensor, which is connected to the apparatus (1) for its energy supply.

16. The wheel rim according to Claim 14 or 15, **characterized in that** a device for wireless data transmission is provided.

17. The wheel rim according to any one of Claims 14 to 16, **characterized in that** a compressor is provided for influencing a tire pressure, wherein the compressor is connected to the apparatus (1) for its energy supply.

18. The use of an apparatus (1) according to any one of Claims 1 to 12 for generating electrical energy in a wheel of a motor vehicle.

## Revendications

1. Dispositif (1), destiné à générer une énergie électrique à partir d'un déplacement en rotation, comportant un stator (3) rotatif autour d'un axe de rotation (2) et un rotor (4) assemblé avec le stator (3), en étant rotatif autour de l'axe de rotation (2), lequel comporte un point de gravité (5) situé à l'extérieur de l'axe de rotation (2), dans le stator (3) étant placée une bobine pour l'induction d'une tension électrique lors d'une rotation du stator (3) par rapport au rotor (4), avec la bobine étant relié un circuit électrique (7) pourvu d'un accumulateur d'énergie (6), destiné à redresser la tension induite dans la bobine, **caractérisé en ce que** le dispositif (1) est aménagé pour détecter une position d'un plan défini par l'axe de rotation (2) et le point de gravité (5) du rotor (4) et pour influencer la position du plan au moyen d'un flux de courant à travers la bobine, de sorte que par le flux de courant, une déviation du plan hors d'une verticale soit limitable lors d'une rotation du stator (3).

2. Dispositif (1) selon la revendication 1, **caractérisé en ce qu'**une déviation du plan à partir d'une position de repos est limitée à un angle de déviation (8) d'un maximum de 180°, notamment d'un maximum de 90°.

3. Dispositif (1) selon la revendication 1 ou 2, **caractérisé en ce qu'**un écart (10) entre le point de gravité (5) du rotor (4) et l'axe de rotation (2) correspond à plus de 10 %, de préférence à plus de 20 %, notamment à plus de 40 % d'un écart maximal (9) entre le rotor (4) et l'axe de rotation (2).

4. Dispositif (1) selon l'une quelconque des revendications 1 à 3, **caractérisé en ce que** pour une rotation autour de l'axe de rotation (2), le stator (3) est conçu avec une vitesse de rotation supérieure à 100 1/minute, de préférence supérieure à 500 1/min, notamment supérieure à 1500 1/minute.

5. Dispositif (1) selon la revendication 1 ou 4, **caractérisé en ce qu'**un capteur d'inclinaison est prévu pour détecter une inclinaison de l'axe de rotation (2).

6. Dispositif (1) selon l'une quelconque des revendications 1 à 5, **caractérisé en ce que** pour limiter un courant à travers la bobine, le dispositif (1) est conçu pour dépendre d'une inclinaison de l'axe de rotation (2).

7. Dispositif (1) selon l'une quelconque des revendications 1 à 6, **caractérisé en ce qu'**une déviation du plan est influençable au moyen d'une énergie provenant de l'accumulateur d'énergie (6).

8. Dispositif (1) selon l'une quelconque des revendications 1 à 7, **caractérisé en ce que** de deux à six, notamment trois bobines sont prévues dans le stator (3).

9. Dispositif (1) selon l'une quelconque des revendications 1 à 8, caractérisé en ce le circuit (7) comporte au moins un transistor, notamment un MOSFET (11, 12), destiné à redresser la tension induite dans la bobine.

10. Dispositif (1) selon la revendication 9, **caractérisé en ce qu'**il est prévu un amplificateur opérationnel (13) relié avec le transistor, ainsi qu'avec un circuit intermédiaire et avec la bobine, de sorte que grâce à l'amplificateur opérationnel (13), une commutation du transistor puisse avoir lieu en fonction d'une tension entre la bobine et le circuit intermédiaire.

11. Dispositif (1) selon la revendication 9, **caractérisé en ce qu'**il est prévu un microcontrôleur pour l'activation du transistor.

12. Dispositif (1) selon l'une quelconque des revendications 1 à 11, **caractérisé en ce qu'**il est prévu un convertisseur de tension, notamment un convertisseur élévateur, destiné à transformer une tension de sortie du circuit intermédiaire à une valeur plus élevée.

13. Jante, notamment jante de voiture, pourvue d'un dispositif (1) destiné à générer une énergie électrique à partir d'un déplacement en rotation, **caractérisé en ce que** le dispositif (1) est conçu selon l'une quelconque des revendications 1 à 12.

14. Jante selon la revendication 13, **caractérisé en ce que** le dispositif (1) est placé au centre de la jante, de telle sorte qu'un axe de rotation (2) de la jante coïncide avec l'axe de rotation (2) du dispositif (1).

15. Jante selon la revendication 14, **caractérisé en ce qu'**il est prévu un capteur, destiné à détecter une propriété physique d'un pneu monté sur la jante, notamment un capteur de pression, qui pour l'alimentation en énergie est relié avec le dispositif (1) .

16. Jante selon la revendication 14 ou 15, **caractérisé en ce qu'**il est prévu un système de transmission de données sans fil.

17. Jante selon l'une quelconque des revendications 14 à 16, **caractérisé en ce qu'**il est prévu un compresseur, destiné à influencer une pression de pneu, pour l'alimentation en énergie, le compresseur étant relié avec le dispositif (1).

18. Utilisation d'un dispositif (1) selon l'une quelconque des revendications 1 à 12 pour générer une énergie électrique dans une roue d'un véhicule automobile.
